# EUROPEAN PATENT SPECIFICATION

(11) **EP 4 090 777 B1**
(45) Date of publication and mention of the grant of the patent: **05.11.2025**
(21) Application number: 21701673.2
(22) Date of filing: 13.01.2021
(51) Int. Cl.: C21B 5/00, C21B 13/00, C21B 13/14, C21C 5/56

(54) **LIQUID FEED FOR A BASIC OXYGEN FURNACE**
FLÜSSIGKEITSZUFÜHRUNG FÜR EINEN SAUERSTOFFBASISOFEN
ALIMENTATION EN LIQUIDE POUR UN FOUR À OXYGÈNE BASIQUE

(30) Priority: 14.01.2020 EP 20151774
(43) Date of publication of application: 23.11.2022
(73) Proprietor: Tata Steel IJmuiden B.V., 1951 JZ Velsen-Noord (NL)
(72) Inventor: BROERSEN, Petrus Gerardus Jacobus, 1970 CA IJmuiden (NL); HAGE, Johannnes Leendert Teunis, 1970 CA IJmuiden (NL)
(74) Representative: Group Intellectual Property Services
(86) International application number: PCT/EP2021/050523
(87) International publication number: WO 2021/144284

(56) References cited:
- US-A- 4 889 323
- US-A- 6 042 776
- US-A1- 2007 079 667
- OHNUKI KAZUO ET AL: "Development of Steel Scrap Melting Process", 30 April 1994 (1994-04-30), pages 1 - 6, XP093063228, Retrieved from the Internet <URL:https://www.nipponsteel.com/en/tech/report/nsc/pdf/6108.pdf> [retrieved on 20230712]

## Description

The invention relates to a liquid feed for a basic oxygen furnace, a method to obtain the liquid feed and a steel plant.

Currently on integrated steelmaking sites the maximum scrap use is about 20 to 25% of the total production volume, although 15 to 20% is more common.

In addition, most integrated sites have restrictions on the use of galvanised scrap, which generally originates from high value steel products. Galvanised steel is widely used for a variety of industrial applications, for example the automotive sector. This product successfully prevents the corrosion of steel. However, the galvanised scrap cannot be utilised in integrated steelmaking sites, as the Zinc (Zn) containing scrap can neither be used in the blast furnace nor in the basic oxygen furnace.

Therefore, the use of scrap, and in particular galvanised scrap, presents a challenge for the circularity of the product.

A well-known process that can handle intake of higher scrap volumes as well as galvanised coated scrap is by melting the scrap in a Scrap Melting Unit (SMU), such as an Electric Arc Furnace (EAF) or Induction Furnace (IF) and turning it directly into new steel. There are no real restrictions on the Zn loading then, and the Zn rich can be used for metallic Zn production via one or two additional processing steps to further concentrate it.

A drawback of this process is the restrictions on the qualities of steel that can be made, one reason is that tramp elements such as Copper(Cu), Chromium (Cr), Nickel (Ni), Molybdenum (Mo) or Tin (Sn) build up in the steel with increased recycling and these cannot be removed in steelmaking. Another reason is that both EAF and IF steelmaking struggle to meet the low nitrogen levels in the steel that can be achieved with (Basic Oxygen Furnace) BOF steelmaking. Hence, high quality steel products, such as pre-consumer scrap, will be processed into a low quality steel product, which cannot be regarded as a sustainable and circular process.

Alternatively, processes are known that convert waste streams into intermediate products. For example, a rotary heart can be used to convert zinc/iron waste streams into a zinc concentrate and direct reduced iron (DRI). Both the DRI and zinc concentrate are intermediate products. The solid DRI can be processed into liquid metal, for example in a blast furnace, steel shop or electric arc furnace.

US2007/0079667A1, for example, describes a method of producing stainless steel by re-using waste materials .US 4 889 323 A further discloses an alternative liquid feed for a Basic Oxygen Furnace.

It is an objective of this invention to provide a liquid feed for high quality steel products and a method to obtain such a liquid feed.

The liquid feed and the method to obtain such a liquid feed of the present invention provide a solution to the reuse of scrap, especially galvanised scrap, into high quality steel products while optionally recovering zinc, thereby enabling a sustainable and circular process in an integrated steel plant. The liquid feed, the method to obtain such a liquid feed, and the steel plant of the present invention is disclosed in the appended claims.

In a first aspect, there is provided a liquid feed for a basic oxygen furnace comprising a first liquid iron stream (1) of carburised molten scrap and a second liquid iron stream(2) from an iron making process. By combining various liquid iron streams, a higher intake of scrap can be realised without compromising on the tramp element requirements or nitrogen inclusions needed for high quality steel products. Furthermore, all liquid iron streams are at the end stage of the iron making processes.

The carburised molten scrap may be obtained from a scrap melting unit such as a EAF or IF. The molten scrap is carburised with carbon, e.g. powdered coal, coke or char coal, such as to obtain a the first liquid iron stream. Preferably, the carbon content of the first liquid iron stream is at least 1 wt.%, more preferably at least 2 wt.%, to ensure a controlled process in the BOF plant. The carbon content should preferably be at most 4 wt.% to ensure an energy efficient process. The molten scrap may be any type of scrap, including galvanised scrap. The inventors realised that by carburising the molten scrap, the oxygen in the scrap is removed, thereby making the scrap into a suitable source for the BOF plant. By carburising the molten scrap a sufficient control of the exothermic process in the BOF plant is ensured. The nitrogen, inherently present in molten scrap, can thus be efficiently removed in the BOF plant and nitrogen inclusions, commonly present in EAF based steels, are hereby prevented.

The second liquid iron stream comes from an iron making process, for example from a blast furnace or a smelting reduction unit (SRU), such as Hlsarna. The second liquid iron stream will typically have low amounts of tramp elements. The Hlsarna ironmaking process is a direct reduced iron process for iron making in which a metalliferous material is processed almost directly into liquid iron.

The metalliferous material is iron ore, optionally supplemented with Hot Briquetted Iron (HBI), Direct reduced iron (DRI) or scrap. The carbon content of the second liquid iron stream is preferably at least 2 wt.% to ensure a controlled process in the BOF plant. Typical carbon contents of the second liquid iron stream are in the range of 3 - 5 wt.%, preferably in the range of 3 - 4 wt.%. Preferably, the second liquid iron stream comes from a smelting reduction unit.

By combining a first liquid iron stream from carburised molten scrap and a second liquid iron stream in a liquid feed for a BOF plant, the level of tramp elements can be controlled by the choice of scrap mix and the ratio between the liquid iron streams. In addition, nitrogen inclusions are prevented in the final steel product by removal of the nitrogen in the BOF plant. Hence the liquid feed according to the invention can be utilized for the production of high quality steel products, while allowing a high intake of scrap.

The liquid iron streams may be combined in a hot metal ladle, optionally preprocessed, e.g. by de-sulphurisation or slag skimming, and can be purified and converted into steel at the BOF plant.

Optionally a third liquid iron stream from an iron making process may be included in the liquid feed. This third liquid iron stream may originate from a blast furnace or a smelting reduction unit.

All the liquid streams are at the end stage of the iron making processes, and are to be combined as the liquid feed for the BOF processes. The liquid feed is processed into steel in the BOF converter. In the BOF scrap, DRI, HBI and/or ore can be added, for example for temperature control. The high quality steel products can be prepared via the conventional techniques as well known in the art.

In an embodiment of the invention, the liquid feed comprises at most 0.04 wt.% Cu and/or at most 0.02 wt.% Sn and/or at most 0.04 wt.% Cr and/or at most 0.04 wt.% Ni and/or at most 0.02 wt.% Mo (all compositional percentages are in weight percent (wt.%) unless otherwise indicated). These tramp elements or residual elements are defined as elements which are not added on purpose to steel and which cannot be removed by simple metallurgical processes. Residual elements enter steel from impurities in ore, coke, flux and scrap; from these, scrap is considered to be the main source of residual elements. By combining at least two liquid iron streams from different sources according to the invention, the amount of tramp elements can be adjusted to the requirements of the end product, while maintaining the possibility to include a significant amount of scrap.

In an embodiment of the invention, the liquid feed comprises at most 0.5 wt.% Silicon (Si), more preferably at most 0.3 wt.% Si, most preferably at most 0.1 wt.% Si. By maintaining a low amount of Si, less heat is generated and the slag formation during steel making is reduced, thereby reducing waste. This can be realised by selecting a second or third liquid iron stream from a smelting reduction unit which typically contains low amounts of Si.

In an embodiment of the invention, the liquid feed comprises at most 0.1 wt.% Phosphorus (P), more preferably at most 0.05 wt.% P, more preferably at most 0.02 wt.% P. By maintaining a low amount of P, new high quality steel products can be accessed. In addition, the slag formation during steel making is reduced, thereby reducing waste. This can be realised, as the liquid iron stream from a smelting reduction unit typically contains low P.

In an embodiment of the invention, the liquid feed comprises at least 25 vol.%, preferably at least 30 vol.%, more preferably at least 35 vol.% from the first liquid iron stream and at least 40 vol.%, preferably at least 45 vol.%, more preferably at least 50 vol.% of the second liquid iron stream. By increasing the percentage of the second liquid iron stream, the scrap material used for the first liquid iron stream can have higher impurities, as the second liquid iron stream has a high purity. This allows for a maximum flexibility in scrap selection.

In an embodiment of the invention, the carburised molten scrap of the first liquid iron stream originates from galvanised scrap. A SMU can melt the galvanised scrap while trapping the zinc as zinc oxide in dust. This has the advantage that galvanised scrap can be used in the first liquid iron stream. In contrast with conventional SMU steel making, the carburised molten scrap in the liquid feed for the basic oxygen furnace can be utilised for high quality steel products.

In a second aspect of the invention, there is provided a method to obtain a liquid feed for a basic oxygen furnace comprising the steps of
- Melting scrap in a scrap melting unit,
- Carburizing the molten scrap in the scrap melting unit to obtain a first liquid iron stream,
- Preparing a second liquid iron stream in an ironmaking process,
- Optionally preparing a third liquid iron stream in an ironmaking process,
- Combining the liquid iron streams to obtain the liquid feed for a basic oxygen furnace.

The first liquid iron stream is prepared by melting and carburizing scrap in a scrap melting unit such as a EAF or IF. The scrap is charged in the SMU. The scrap is heated to or above its melting temperature Tmelt, typically between 1400 °C - 1600 °C. The molten scrap may be carburized by blowing a carbon source with a lance in the molten scrap. The carbon source could be powdered coal or char coal. Preferably the scrap is melted at atmospheric pressure. The scrap may be any type of scrap, including galvanised scrap comprising zinc.

In an embodiment the conditions in the scrap melting unit are set to obtain a first liquid iron stream with a carbon content of 1 - 4 wt.%. In conventional processes the molten scrap is not carburised and will typically have a carbon content below 0.5 wt.%. However a carbon content of at least 1 wt.% is desired to make the liquid iron stream suitable for a BOF plant, in order to ensure a controlled process in the BOF plant.

The second liquid iron stream is preferably prepared in a smelting reduction unit, such as Hlsarna. The Hlsarna ironmaking process is a direct reduced iron process for iron making in which a metalliferous material is processed almost directly into liquid iron. The metalliferous material is iron ore, optionally supplemented with HBI, DRI or scrap.

In an embodiment the conditions in the smelting reduction unit are set to obtain a second liquid iron stream with a carbon content of 3 - 4 wt.%.

The first and second liquid iron stream, and optionally a third liquid iron stream are than combined. The conditions and starting materials are chosen as such that the quality of the liquid feed, resulting from the combined liquid iron streams is suitable for the production of high quality steel products. Preferably the liquid feed has a low amount of tramp elements. Preferably the liquid feed comprises at most 0.04 wt.% Cu, at most 0.02 wt.% Sn, at most 0.04 wt.% Cr at most 0.04 wt.% Ni and at most 0.02 wt.% Mo.

The liquid iron streams may be combined in any order. They may be tapped in a container, for example in a hot metal ladle. The combined liquid iron streams should remain liquid, and the overall temperature in the container should preferably be above 1400 °C. In the container, standard operations such as desulphurisation and/or slag skimming may optionally be carried. The combined liquid feed is then charged into the convertor. Optionally the liquid iron streams are combined in the BOF converter.

In an embodiment the liquid feed may be mixed, for example by desulphurisation.

The liquid feed is processed into liquid steel in the BOF. In the BOF scrap/DRI/HBI/ore can be used for temperature control. The high quality steel products can be prepared via the conventional techniques as well known in the art

Overall, a much higher amount of scrap can be processed in the method according to the invention, without compromising the quality of the steel product.

In an embodiment, the first liquid iron stream is prepared by melting and carburizing galvanised scrap in the SMU and the second liquid iron stream is prepared in a smelting reduction unit. The zinc originating from the galvanised scrap is collected as zinc dust, typically comprising about 20 wt.% ZnO. The zinc dust is then injected in the smelting reduction unit, while simultaneously producing the secondary liquid iron stream. To enrich the zinc content in the smelting reduction unit even further, zinc rich iron ores or galvanised scrap can optionally be used in the smelting reduction unit. In the smelting reduction unit the zinc is further concentrated to provide a zinc concentrate, typically comprising at least 60 wt.% ZnO as a valuable by product, such as described in WO2019/185863, which is hereby incorporated in reference. The zinc concentrate can be further processed and used for example for galvanizing steel products. This embodiment of the invention thus recycles the valuable zinc as well as the scrap originating from high quality products into new high quality products and thereby represents a sustainable and circular process for galvanised steel.

In a third aspect of the invention, there is provided a steel plant according to claim 15.

A steel plant according to the invention will have the advantage that a much higher amount of scrap can be processed compared to a conventional layout. In addition, a wider variety of scrap quality can be used, for example galvanised scrap. If galvanised scrap is used, the zinc dust is collected in the SMU and injected in the SRU. In the SRU, the zinc dust is concentrated into a zinc concentrate which eventually can be used to galvanise the steel product.

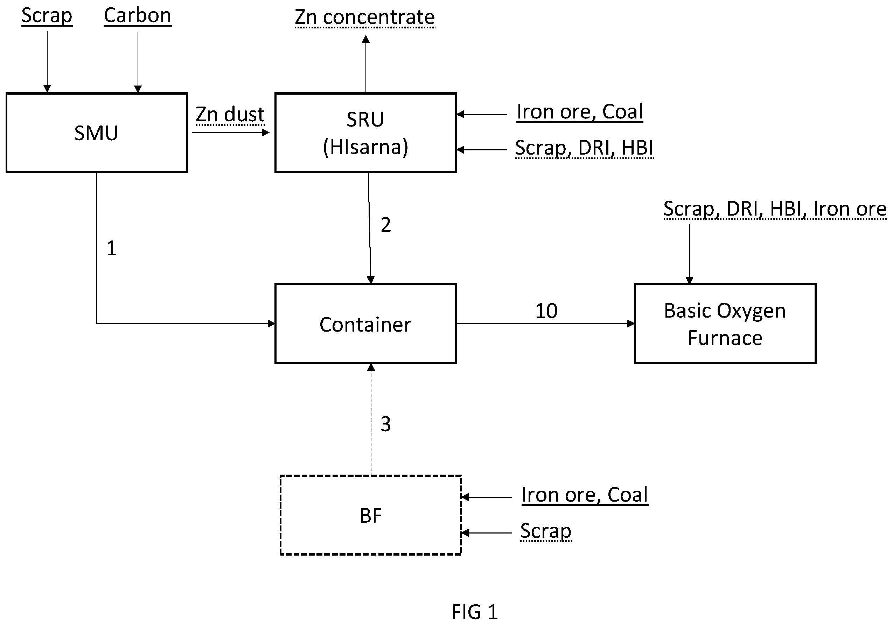

The invention is further explained by the non-limiting example shown in FIG 1. FIG 1 depicts a SMU to provide a first liquid iron stream (1), a SRU to provide a second liquid iron stream (2) and a BF to provide a third liquid iron stream (3). The SMU, is charged with galvanised scrap, melted at about 1500 °C and carburized with powdered coal which is blown in the molten scrap with a lance, such as to obtain the first liquid iron stream with a carbon content of 2.5 wt.%. The SMU further captures the zinc dust, comprising about 15 wt.% of zinc oxide.

Hlsarna is used to provide a second liquid iron stream (2) and is charged with iron ores and coals and 10 wt.% of scrap to create the second liquid iron stream. The zinc dust originating from the SMU is also injected as described in WO2019/185863, thereby obtaining a zinc concentrate comprising more than 40 wt.% of zinc oxide and utilizing all iron further present in the zinc dust.

The blast furnace provides a third liquid iron stream (3) using 0% scrap.

The liquid iron streams are combined to obtain the liquid feed (10) in a ratio of 50 vol% of the first liquid iron stream, 40 vol% of the second liquid iron stream and 10 vol% of the third liquid iron stream, in a container such as a hot metal ladle. The liquid iron streams are consecutively tapped from the source into the ladle. The liquid feed (10) is maintained at a temperature of about 1400 °C. The obtained liquid feed has 0.1 wt.% Si, 0.01 wt.% P, 0.03 wt.% Cu and 0.01 wt.% Sn, thereby allowing for the production of high quality steel products. The liquid feed is de-sulphurised to obtain 0.01 wt.% of S, before charging the liquid feed into the converter at the basic oxygen furnace. The de-sulphurisation also contributes to mixing of the liquid feed. During the primary steel making in the basic oxygen furnace the N is reduced to a level of 10 ppm and a high quality primary steel is obtained. At the basic oxygen furnace 10 wt.% of scrap is added to the converter for temperature control.

As such an overall scrap rate of more than 50 wt.% can be reached in the primary steel making process according to the invention, while allowing for the production of high quality steel products. Depending on the final product and the quality of the scrap, the scrap rate can be increased up to 75 wt.%, if the SMU and Hlsarna are running on maximum scrap rate, thereby contributing to the circular economy.

## Claims

1. A liquid feed (10) for a basic oxygen furnace comprising a first liquid iron stream (1) of carburised molten scrap and a second liquid iron stream (2) from an iron making process, wherein the liquid feed comprises at most 0.5 wt.% Si, and wherein the first liquid iron stream has a carbon content in the range of 2 - 4 wt.% and/or wherein the second liquid iron stream has a carbon content in the range of 2 - 5 wt.%.

2. The liquid feed according to claim 1, further comprising a third liquid iron stream (3).

3. The liquid feed according to claim 1 or 2, wherein the second liquid iron stream (2) and/or third liquid iron stream comprises liquid iron obtained from a blast furnace and/or a smelting reduction unit.

4. The liquid feed according to any of claims 1-3, wherein the second liquid iron stream is obtained from a smelting reduction unit.

5. The liquid feed according to any of the preceding claims, wherein the second liquid iron stream has a carbon content in the range of 3 - 5 wt.%.

6. The liquid feed according to any of the preceding claims comprising at least 25 vol% of the first liquid iron stream and at least 40 vol% of the second liquid iron stream.

7. The liquid feed according to any of the preceding claims, comprising at most 0.04 wt.% Cu and/or at most 0.02 wt.% Sn and/or at most 0.04 wt.% Cr and/or at most 0.04 wt.% Ni and/or at most 0.02 wt.% Mo.

8. The liquid feed to any of the preceding claims, wherein the carburised molten scrap comprises galvanised scrap.

9. A method to obtain a liquid feed for a basic oxygen furnace comprising the steps of
- Melting scrap in a scrap melting unit,
- Carburizing the molten scrap in the scrap melting unit to obtain a first liquid iron stream,
- Preparing a second liquid iron stream in an ironmaking process,
- Optionally preparing a third liquid iron stream in an ironmaking process,
- Combining the liquid iron streams to obtain the liquid feed for a basic oxygen furnace, wherein the liquid feed comprises at most 0.5 wt.% Si, and wherein the first liquid iron stream has a carbon content in the range of 2 - 4 wt.% and/or wherein the second liquid iron stream has a carbon content in the range of 2 - 5 wt. %.

10. The method of claim 9 wherein the scrap is galvanised scrap comprising zinc.

11. The method according to claim 9 or 10 wherein the second liquid iron stream is prepared in a smelting reduction unit.

12. The method according to any of the claims 9 - 11 wherein the third liquid iron stream is prepared in a blast furnace.

13. The method according to claim 11 or 12 further comprising the steps of
- Recovering a primary zinc dust from the galvanised scrap in the scrap melting unit
- Injecting the recovered zinc dust into the smelting reduction unit
- Concentrating the zinc dust into a zinc concentrate in the smelting reduction unit while preparing the second liquid iron stream

14. A steel plant comprising an electric arc furnace (EAF) or an Induction Furnace (IF) as a scrap melting unit configured to provide a first liquid iron stream and a primary zinc dust, a smelting reduction unit configured to provide a second liquid iron stream and optionally a zinc concentrate, and a basic oxygen furnace, wherein the basic oxygen furnace is fed with a combined liquid iron stream from the scrap melting unit and the smelting reduction unit.

15. A steel plant according to claim 14, wherein the primary zinc dust from the scrap melting unit is fed to the smelting reduction unit in order to obtain the zinc concentrate.

## Patentansprüche

1. Flüssigkeitszuführung (10) für einen Sauerstoffbasisofen, umfassend einen ersten flüssigen Eisenstrom (1) aus aufgekohltem geschmolzenem Schrott und einen zweiten flüssigen Eisenstrom (2) aus einem Eisenherstellungsprozess, wobei die Flüssigkeitszuführung höchstens 0,5 Gew.-% Si umfasst und wobei der erste flüssige Eisenstrom einen Kohlenstoffgehalt im Bereich von 2 - 4 Gew.-% aufweist und/oder wobei der zweite flüssige Eisenstrom einen Kohlenstoffgehalt im Bereich von 2 - 5 Gew.-% aufweist.

2. Flüssigkeitszuführung nach Anspruch 1, ferner umfassend einen dritten flüssigen Eisenstrom (3).

3. Flüssigkeitszuführung nach Anspruch 1 oder 2, wobei der zweite flüssige Eisenstrom (2) und/oder der dritte flüssige Eisenstrom flüssiges Eisen umfasst, das aus einem Hochofen und/oder einer Schmelzreduktionsanlage erhalten wird.

4. Flüssigkeitszuführung nach einem der Ansprüche 1-3, wobei der zweite flüssige Eisenstrom aus einer Schmelzreduktionsanlage erhalten wird.

5. Flüssigkeitszuführung nach einem der vorhergehenden Ansprüche, wobei der zweite flüssige Eisenstrom einen Kohlenstoffgehalt im Bereich von 3 - 5 Gew.-% aufweist.

6. Flüssigkeitszuführung nach einem der vorhergehenden Ansprüche, umfassend mindestens 25 Vol.-% des ersten flüssigen Eisenstroms und mindestens 40 Vol.-% des zweiten flüssigen Eisenstroms.

7. Flüssigkeitszuführung nach einem der vorhergehenden Ansprüche, umfassend höchstens 0,04 Gew.-% Cu und/oder höchstens 0,02 Gew.% Sn und/oder höchstens 0,04 Gew.% Cr und/oder höchstens 0,04 Gew.% Ni und/oder höchstens 0,02 Gew.-% Mo.

8. Flüssigkeitszuführung nach einem der vorhergehenden Ansprüche, wobei der aufgekohlte geschmolzene Schrott galvanisierten Schrott umfasst.

9. Verfahren zum Erhalten einer Flüssigkeitszuführung für einen Sauerstoffbasisofen, umfassend die folgenden Schritte
- Schmelzen von Schrott in einer Schrottschmelzanlage,
- Aufkohlen des geschmolzenen Schrotts in der Schrottschmelzanlage, um einen ersten flüssigen Eisenstrom zu erhalten,
- Aufbereiten eines zweiten flüssigen Eisenstroms in einem Eisenherstellungsprozess,
- optional Aufbereiten eines dritten flüssigen Eisenstroms in einem Eisenherstellungsprozess,
- Zusammenführen der flüssigen Eisenströme, um die Flüssigkeitszuführung für einen Sauerstoffbasisofen zu erhalten, wobei die Flüssigkeitszuführung höchstens 0,5 Gew.% Si umfasst und wobei der erste flüssige Eisenstrom einen Kohlenstoffgehalt im Bereich von 2 - 4 Gew.-% aufweist und/oder wobei der zweite flüssige Eisenstrom einen Kohlenstoffgehalt im Bereich von 2 - 5 Gew.-% aufweist.

10. Verfahren nach Anspruch 9, wobei der Schrott galvanisierter Schrott ist, der Zink umfasst.

11. Verfahren nach Anspruch 9 oder 10, wobei der zweite flüssige Eisenstrom in einer Schmelzreduktionsanlage aufbereitet wird.

12. Verfahren nach einem der Ansprüche 9 - 11, wobei der dritte flüssige Eisenstrom in einem Hochofen aufbereitet wird.

13. Verfahren nach Anspruch 11 oder 12, ferner umfassend die folgenden Schritte
- Rückgewinnen eines primären Zinkstaubs aus dem galvanisierten Schrott in der Schrottschmelzanlage,
- Einspritzen des zurückgewonnenen Zinkstaubes in die Schmelzreduktionsanlage,
- Aufkonzentrieren des Zinkstaubs zu einem Zinkkonzentrat in der Schmelzreduktionsanlage während des Aufbereitens des zweiten flüssigen Eisenstroms.

14. Stahlwerk, umfassend einen Elektrolichtbogenofen (EAF) oder einen Induktionsofen (IF) als eine Schrottschmelzanlage, die dazu konfiguriert ist, einen ersten flüssigen Eisenstrom und einen primären Zinkstaub bereitzustellen, eine Schmelzreduktionsanlage, die dazu konfiguriert ist, einen zweiten flüssigen Eisenstrom und optional ein Zinkkonzentrat bereitzustellen,
und einen Sauerstoffbasisofen, wobei dem Sauerstoffbasisofen ein zusammengeführter flüssiger Eisenstrom aus der Schrottschmelzanlage und der Schmelzreduktionsanlage zugeführt wird.

15. Stahlwerk nach Anspruch 14, wobei der primäre Zinkstaub aus der Schrottschmelzanlage der Schmelzreduktionsanlage zugeführt wird, um das Zinkkonzentrat zu erhalten.

## Revendications

1. Alimentation en liquide (10) pour un four à oxygène basique comprenant un premier flux de fer liquide (1) de ferraille fondue carburée et un deuxième flux de fer liquide (2) provenant d'un procédé de fabrication de fer, dans laquelle l'alimentation en liquide comprend au plus 0,5 % en poids de Si, et dans laquelle le premier flux de fer liquide présente une teneur en carbone allant de 2 à 4 % en poids et/ou dans laquelle le deuxième flux de fer liquide présente une teneur en carbone allant de 2 à 5 % en poids.

2. Alimentation en liquide selon la revendication 1, comprenant en outre un troisième flux de fer liquide (3).

3. Alimentation en liquide selon la revendication 1 ou 2, dans laquelle le deuxième flux de fer liquide (2) et/ou le troisième flux de fer liquide comprend du fer liquide obtenu à partir d'un haut fourneau et/ou d'une unité de réduction de fusion.

4. Alimentation en liquide selon l'une quelconque des revendications 1 à 3, dans laquelle le deuxième flux de fer liquide est obtenu à partir d'une unité de réduction de fusion.

5. Alimentation en liquide selon l'une quelconque des revendications précédentes, dans laquelle le deuxième flux de fer liquide présente une teneur en carbone allant de 3 à 5 % en poids.

6. Alimentation en liquide selon l'une quelconque des revendications précédentes, comprenant au moins 25 % en volume du premier flux de fer liquide et au moins 40 % en volume du deuxième flux de fer liquide.

7. Alimentation en liquide selon l'une quelconque des revendications précédentes, comprenant au plus 0,04 % en poids de Cu et/ou au plus 0,02 % en poids de Sn et/ou au plus 0,04 % en poids de Cr et/ou au plus 0,04 % en poids de Ni et/ou au plus 0,02 % en poids de Mo.

8. Alimentation en liquide selon l'une quelconque des revendications précédentes, dans laquelle la ferraille fondue carburée comprend de la ferraille galvanisée.

9. Procédé destiné à obtenir une alimentation en liquide pour un four à oxygène basique comprenant les étapes de
- fusion de ferraille dans une unité de fusion de ferraille,
- carburation de la ferraille fondue dans l'unité de fusion de ferraille pour obtenir un premier flux de fer liquide,
- préparation d'un deuxième flux de fer liquide dans un processus de fabrication de fer,
- éventuellement, préparation d'un troisième flux de fer liquide dans un processus de fabrication de fer,
- combinaison des flux de fer liquide pour obtenir l'alimentation en liquide pour un four à oxygène basique, dans lequel l'alimentation en liquide comprend au plus 0,5 % en poids de Si, et dans lequel le premier flux de fer liquide présente une teneur en carbone allant de 2 à 4 % en poids et/ou dans lequel le deuxième flux de fer liquide présente une teneur en carbone allant de 2 à 5 % en poids.

10. Procédé de la revendication 9, dans lequel la ferraille est une ferraille galvanisée comprenant du zinc.

11. Procédé selon la revendication 9 ou 10, dans lequel le deuxième flux de fer liquide est préparé dans une unité de réduction de fusion.

12. Procédé selon l'une quelconque des revendications 9 à 11, dans lequel le troisième flux de fer liquide est préparé dans un haut fourneau.

13. Procédé selon la revendication 11 ou 12, comprenant en outre les étapes de
- récupération d'une poussière de zinc primaire à partir de la ferraille galvanisée dans l'unité de fusion de ferraille
- injection de la poussière de zinc récupérée dans l'unité de réduction de fusion
- concentration de la poussière de zinc dans un concentré de zinc dans l'unité de réduction de fusion tout en préparant le deuxième flux de fer liquide.

14. Usine sidérurgique comprenant un four à arc électrique (EAF) ou un four à induction (IF) en tant qu'unité de fusion de ferraille conçue pour fournir un premier flux de fer liquide et une poussière de zinc primaire, une unité de réduction de fusion conçue pour fournir un deuxième flux de fer liquide et éventuellement un concentré de zinc,
et un four à oxygène basique, dans laquelle le four à oxygène basique est alimenté par un flux de fer liquide combiné provenant de l'unité de fusion de ferraille et de l'unité de réduction de fusion.

15. Usine sidérurgique selon la revendication 14, dans laquelle la poussière de zinc primaire provenant de l'unité de fusion de ferraille est introduite dans l'unité de réduction de fusion afin d'obtenir le concentré de zinc.
